# EUROPÄISCHE PATENTANMELDUNG

(11) **EP 1 482 231 A1**
(43) Veröffentlichungstag der Anmeldung: **01.12.2004**
(21) Anmeldenummer: 04102346.6
(22) Anmeldetag: 27.05.2004
(51) Int. Cl.: F16L 37/244

(54) **Schnellverschluss**

(30) Priorität: 30.05.2003 DE 10324675
(71) Anmelder: HILTI Aktiengesellschaft, 9494 Schaan (LI)
(72) Erfinder: Hefele, Christian, 87739, Breitenbrunn (DE); Popp, Franz, 86807, Buchloe (DE)
(74) Vertreter: Wildi, Roland

(57) **Zusammenfassung**

Ein Schnellverschluss (1) zum Verbinden eines Mischerrohres (3) und eines Verbindungsteils (2) eines Auspressgeräts. Das Verbindungsteil (2) weist einen Anschluss (9) mit einem konischen Gewindegrundkörper auf, an dem ein Aussengewinde (12) angeordnet ist. Das Mischerrohr (3) weist einen konischen Gewindegrundkörper auf, an dem ein Innengewinde (19) angeordnet ist. Das Innengewinde (19) am Anschlussteil (16) des Mischerrohres (3) ist ein mehrgängiges Innengewinde.

## Beschreibung

### Technisches Gebiet

Die Erfindung betrifft einen Schnellverschluss zum Verbinden eines ersten Teils und eines zweiten Teils, insbesondere zum Verbinden eines Mischerrohres und eines Verbindungsteils eines Auspressgeräts. Der erste Teil weist einen konischen Gewindegrundkörper mit einem, entlang dem konischen Gewindekörper verlaufenden Aussengewinde auf. Der zweite Teil weist einen konischen Gewindegrundkörper mit einem, in dem konischen Gewindegrundkörper verlaufenden Innengewinde auf.

### Stand der Technik

Als Schnellverschluss sind beispielsweise so genannte Bajonettverschlüsse bekannt, bei denen ein Teil mit Nocken in einen anderen Teil mit einer entsprechenden Aufnahme eingesteckt und durch Drehen kraftschlüssig mit dem ersten Teil verbunden wird. Aus der DE 198 38 560 A1 ist ein Drehschnellverschluss zum miteinander Verbinden mehrerer Bauteile bekannt, wobei das Halteteil Klemmvorsprünge aufweist, die durch Drehen des Halteteils ein zweites Bauteil hintergreifen. Dieser bekannte Schnellverschluss lässt sich schnell schliessen, kann jedoch nur bedingt hohe Kräfte übertragen.

Insbesondere bei einem Auspressgerät für pastöse Massen treten an der Verbindung eines Verbindungsteils und eines Mischerrohres hohe Kräfte auf, die von der Verbindung übernommen werden müssen. Zur Übertragung dieser hohen Kräfte über die Verbindung sind zylindrische Rundgewinde bekannt. Diese sind jedoch aufwändig in der Anwendung, da zur Herstellung der Verbindung zwischen den Teilen mehrere Umdrehungen nötig sind.

Aus dem Bereich der Behälterverschlüsse ist beispielsweise aus der US 4,798,195 A ein Verschluss bekannt, der einen Anschluss mit einem konischen, in Richtung der Öffnung progressiv abnehmenden Durchmesser angeordnetes Gewinde aufweist. Mittels der komplementär zum Anschluss ausgebildeten Verschlusskappe, kann der Behälter mit einer geringen Drehung verschlossen werden. Nachteilig an dieser Lösung ist, dass die Herstellung des Gewindes beispielsweise in einem Spritz-/Gussverfahren aufgrund der vollständig nötigen Entspindelung des Gewindes sehr zeit- und kostenintensiv ist.

Aus der US 4,699,285 A ist ein Verschluss für Flaschen bekannt, bei dem das Gewinde an der Flasche konisch geneigt ist und im Bereich des Gewindes eine konstante Wandstärke, sowie gleichmässige Flankenhöhe aufweist. Nachteilig an dieser Lösung ist, dass über diese Verbindung nur bedingt hohe Kräfte, wie sie beispielsweise bei Anschlüssen von Auspressgeräten auftreten, übernommen werden können.

### Darstellung der Erfindung

Aufgabe der Erfindung ist es, einen Schnellverschluss zum Verbinden zweier Teile zu schaffen, der bei maximaler Anwendersicherheit einfach in der Anwendung sowie einfach und kostengünstig herstellbar ist.

Die Aufgabe ist durch die Merkmale des unabhängigen Anspruchs gelöst. Vorteilhafte Weiterbildungen sind in den Unteransprüchen dargelegt.

Gemäss der Erfindung weist ein Schnellverschluss zum Verbinden eines ersten Teils und eines zweiten Teils, insbesondere zum Verbinden eines Mischerrohres und eines Verbindungsteils eines Auspressgeräts, einen ersten Teil mit einem konischen Gewindegrundkörper und mit einem, entlang dem konischen Gewindekörper verlaufenden Aussengewinde auf. Der zweite Teil weist einen konischen Gewindegrundkörper mit einem, in dem konischen Gewindegrundkörper verlaufenden Innengewinde auf. Das Innengewinde am zweiten Teil des Schnellverschlusses ist ein mehrgängiges Gewinde mit mehreren Gewindezügen.

Das Innengewinde am zweiten Teil des erfindungsgemässen Schnellverschlusses kann zwei, drei oder mehr Gewindezüge aufweisen. Das Aussengewinde am ersten Teil weist zumindest einen Gewindezug auf, der in seiner Ausgestaltung, wie beispielsweise der Steigung und der Abmessungen in das mehrgängige Innengewinde am zweiten Teil eingreifen kann. Der erste Teil und der zweite Teil werden ineinander gesteckt, bis der zumindest eine Gewindezug des Aussengewindes eine der Gewindespitzen des mehrgängigen Innenengewindes berührt. Anschliessend werden die Teile miteinander verdreht, so dass das Aussengewinde und das Innengewinde ineinander greifen. Dabei treffen die Gewindeflanken des Aussengewindes auf eine der Gewindeflanken des Innengewindes. Die Mehrgängigkeit des Innengewindes erlaubt eine schnelle Zusammenführung der Verbindung. Zudem lassen sich die Teile des erfindungsgemässen Schnellverschlusses zeit- und kostengünstig herstellen. Dabei kann der konische Grundkörper des ersten Teils wie auch des zweiten Teils eine konstante Wandstärke oder eine in der Dicke variierende Wandstärke aufweisen, die bevorzugt kontinuierlich von dem freien Ende her zunimmt.

In einer Variante dazu weist das Innengewinde weniger Gewindezüge als das Aussenwinde auf. Zumindest ein Gewindezug des Innengewindes ist bei dieser Ausführungsform derart ausgestaltet, dass dieser Gewindezug zumindest zwei Gewindezüge des Aussengewindes aufnehmen kann.

Bevorzugt ist das Aussengewinde am ersten Teil komplementär zum Innengewinde am zweiten Teil ausgebildet. Die Anzahl an Gewindezügen am Aussengewinde kann kleiner oder gleich der Anzahl an Gewindezügen des Innengewinde sein, sofern die Steigung und die Ausbildung der Gewindezüge am Aussengewinde mit der Steigung und der Ausbildung der Gewindezüge am Innengewinde übereinstimmen. Das Aussengewinde weist jedoch vorzugsweise die gleiche Anzahl an Gewindezügen wie das Innengewinde auf. Bei dieser Ausführungsform treffen mehrere Gewindeflanken des Aussengewindes auf die Gewindeflanken des Innengewindes, so dass die Kraftübertragung beim erfindungsgemässen Schnellverschluss über mehrere Flanken der Gewinde erfolgt und somit sich höhere Kräfte als bei den bekannten Ausführungen der Verschlüsse übertragen lassen.

Vorzugsweise ist das Aussengewinde ein Sägezahngewinde. Diese Form des Gewindes erlaubt eine Übertragung hoher Kräfte. Daneben können auch andere Formen von Gewinde, wie beispielsweise ein Trapezgewinde, beim erfindungsgemässen Schnellverschluss Anwendung finden.

Vorteilhafterweise ist an der freien Stirnkante des ersten Teils ein Dichtabschluss zur Abdichtung der Verbindung zwischen dem ersten Teil und dem zweiten Teil angeordnet. An der freien Stirnkante des ersten Teils kann beispielsweise eine Dichtlippe vorgesehen werden, welche die Abdichtung der Verbindung beim Zusammenführen der beiden Teile sicherstellt.

Bevorzugt weist der zweite Teil eine Aufnahme insbesondere zur Zentrierung einer Dichtlippe auf. Der konische Bereich des zweiten Teils weist beispielsweise zur Bildung einer Aufnahme einen Gefällswechsel auf, so dass in diesem Bereich z. B. ein steilerer Konus als im Bereich des Innengewindes vorhanden ist. Zur Sicherstellung der Abdichtung der Verbindung kann die freie Stirnkante z. B. einen Aussendurchmesser aufweisen, der grösser als der Innendurchmesser am zweiten Teil ausgebildet ist, so dass eine einwandfreie Abdichtung infolge der Materialverdrängung beim Zusammenführen der beiden Teile gegeben ist. Ist die freie Stirnkante mit einer Dichtlippe versehen, kann die Aufnahme zur Zentrierung der Dichtlippe und somit zur Sicherstellung der einwandfreien Abdichtung ausgebildet sein.

In einer Variante zu den ausgeführten Abdichtungen der Verbindung, ist der zweite Teil im Inneren mit einem geeigneten Dichtabschluss, z. B. mit einer Dichtlippe, versehen, der mit der im zusammengeführten Zustand der beiden Teile des erfindungsgemässen Schnellverschlusses die Abdichtung mit der freien Stirnkante des ersten Teils gewährleistet.

Vorzugsweise sind der erste Teil und/oder der zweite Teil aus einem Kunststoff gefertigt. Ist das zweite Teil des erfindungsgemässen Schnellverschlusses ein Mischerrohr, handelt es sich zumeist um ein Massenprodukt, das bei jedem Arbeitsunterbruch vor der weiteren Verwendung des durch das Mischerrohr auszubringenden Inhalts ausgewechselt wird. Kunststoff stellt ein kostengünstiges und leicht in Form bringbares Ausgangsmaterial für die Teile des erfindungsgemässen Schnellverschlusses dar. Bevorzugt erfolgt die Fertigung des ersten Teils und/oder des zweiten Teils in einem Spritz-/Gussverfahren, insbesondere wenn als Ausgangsmaterial ein Kunststoff verwendet wird. Weist das verwendete Material zur Herstellung insbesondere des Mischerrohres eine gewisse Verformbarkeit auf, kann das mehrgängige Innengewinde in den Abmessungen kleiner als die Abmessungen des zumindest einen Gewindezugs am Aussengewinde ausgebildet sein. Bei dieser Ausführungsform verklemmen sich der erste Teil und der zweite Teil des erfindungsgemässen Schnellverschlusses, wobei zwischen den beiden Teilen eine Zwischenstufe von einer form- und stoffschlüssigen Verbindung erreicht wird. Des Weiteren können der erste Teil und/oder der zweite Teil des Schnellverschlusses beispielsweise aus Metall gefertigt sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand dreier Ausführungsbeispiele näher erläutert. Es zeigen:
- Fig. 1: Eine perspektivische Darstellung eines ersten Ausführungsbeispiels der Erfindung mit einem Verbindungsteil eines Auspressgeräts und einem Mischerrohr, im Teilschnitt, vor der Zusammenführung beider Teile;
- Fig. 2: eine Seitenansicht auf einen Ausschnitt eines zweiten Ausführungsbeispiel s des erfindungsgemässen ersten Teils mit einem dreigängigen Aussengewinde; und
- Fig. 3: eine perspektivische Darstellung eines weiteren Ausführungsbeispiels der Erfindung mit einem Verbindungsteil eines Auspressgeräts und einem Mischerrohr, im Teilschnitt, vor der Zusammenführung beider Teile.

Grundsätzlich sind in den Figuren gleiche Teile mit den gleichen Bezugszeichen versehen.

### Wege zur Ausführung der Erfindung

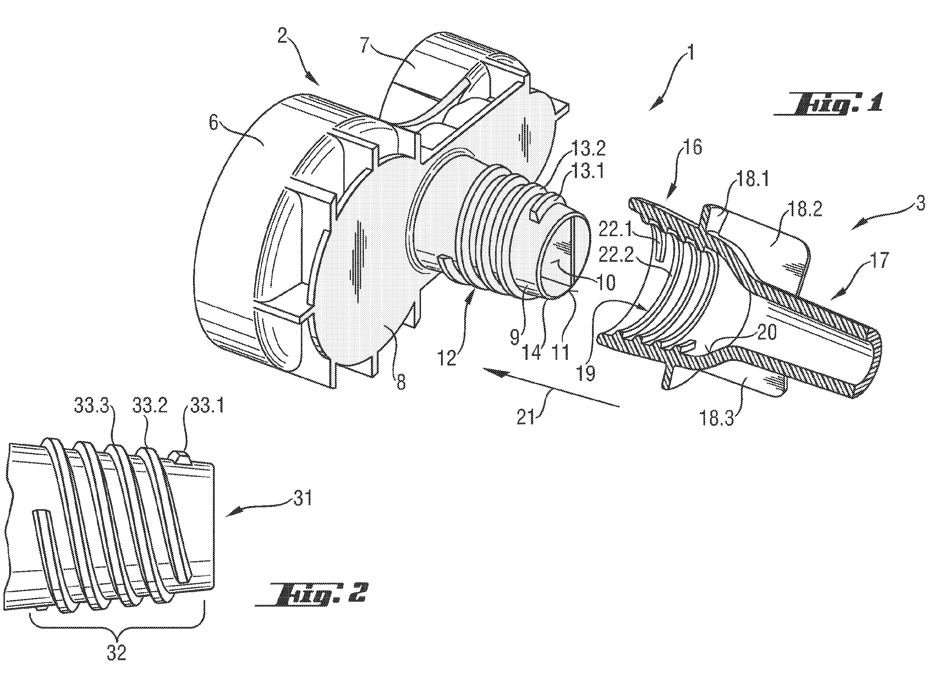

In der Fig. 1 ist eine perspektivische Darstellung eines ersten Ausführungsbeispiels der Erfindung mit einem Verbindungsteil eines Auspressgeräts und einem Mischerrohr, im Teilschnitt, vor der Zusammenführung beider Teile gezeigt. Der erfindungsgemässe Schnellverschluss 1 ist an einem Auspressgerät (hier nicht dargestellt) zum Auspressen einer Zweikomponentenmasse angeordnet und umfasst als erstes Teil ein Verbindungsteil 2 und als zweites Teil ein Mischerrohr 3.

Das Verbindungsteil 2 umfasst Anschlüsse 6 und 7 für den Anschluss zweier Gebinde, in denen jeweils eine Komponente der auszubringenden Zweikomponentenmasse verpackt ist. An den Anschlüssen 6 und 7 schliesst sich eine Zusammenführkammer 8 an, von der der Anschluss 9 abzweigt. Der Anschluss 9 weist eine Zwischenwand 10 auf, die ein Vermischen der einzelnen Komponenten der Zweikomponentenmasse im Verbindungsteil 2 verhindert.

Der Anschluss 9 weist einen konischen Grundkörper auf. Die Stärke der Wandung des Anschlusses 9 nimmt von der freien Stirnkante 11, welche für eine verbesserte Abdichtung der zusammengeführten Teile als Dichtabschluss eine Dichtlippe 14 aufweisen kann, in Richtung der Zusammenführkammer 8 kontinuierlich zu. An der Aussenseite des Anschlusses 9 ist ein zweigängiges Aussengewinde 12 angeordnet, das einen ersten Gewindezug 13.1 und einen zweiten Gewindezug 13.2 aufweist, wobei die beiden Gewindezüge 13.1 und 13.2 parallel zueinander verlaufen und die gleiche Steigung aufweisen. Das Aussengewinde 12 ist als Sägezahngewinde ausgebildet.

Das Mischerrohr 3 umfasst einen Anschlussteil 16 und einen Rohrabschnitt 17, in welchem beispielsweise ein Statikmischer zur Gewährleistung der einwandfreien Mischung der, in das Mischerrohr 3 zugeführten Komponenten der Zweikomponentenmasse angeordnet wird. Im Bereich des Anschlussteils 16 sind an der Aussenseite des Mischerrohres 3 Vorsprünge 18.1, 18.2 und 18.3 vorgesehen, die ein Ergreifen und Betätigen des Schnellverschlusses 1 erleichtern.

Das Anschlussteil 16 weist einen konischen Grundkörper auf, in dem ein komplementär zum Aussengewinde 12 am Anschluss 9 ausgebildetes Innengewinde 19 ausgeformt ist. Das Innengewinde 19 weist einen ersten Gewindezug 22.1 und einen zweiten Gewindezug 22.2 auf. Die Steigung und Ausbildung der Gewindezüge 22.1 und 22.2 des Innengewindes 19 entsprechen der Steigung und im Wesentlichen der Ausbildung der Gewindezüge 13.1 und 13.2 am Aussengewinde 12. An dem Rohrabschnitt 17 zugewandtes Ende des Anschlussteils 16 weist dieses eine steilere Konusneigung als im Bereich des Innengewindes 19 auf.

Nachfolgend wird anhand des Ablaufs der Zusammenführung des Verbindungsteils 2 und dem Mischerrohr 3 die Funktion der einzelnen Elemente des erfindungsgemässen Schnellverschlusses 1 erläutert. Das Verbindungsteil 2 ist üblicherweise in einem Auspressgerät (hier nicht dargestellt) angeordnet. Das Mischerrohr 3 wird in Richtung des Pfeils 21 über den Anschluss 9 am Verbindungsteil 2 geführt, bis sich die Enden des Aussengewindes 12 am Anschluss 9 und die Gewindezüge im Endbereich des Innengewindes 19 im Anschlussteil 16 berühren. Durch beispielsweise eine Drehung um den halben Umfang wird das Mischerrohr 3 mit dem Verbindungsteil 2 kraftschlüssig verbunden. Die freie Stirnkante 11 kommt dabei mit der Aufnahme 20 des Anschlussteils 16 in Kontakt und dichtet die Verbindung zwischen dem Verbindungsteil 2 und dem Mischerrohr 3 einwandfrei ab.

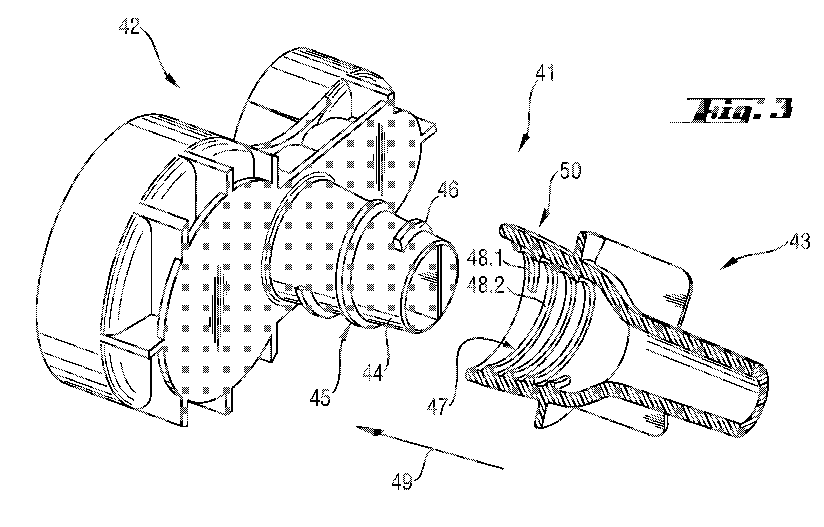

Fig. 2 zeigt eine Seitenansicht auf einen Ausschnitt eines zweiten Ausführungsbeispiels des erfindungsgemässen ersten Teils mit einem dreigängigen Aussengewinde. Der Anschluss 31 weist einen konischen Grundkörper auf. An der Aussenseite des Anschlusses 31 ist ein dreigängiges Aussengewinde 32 angeordnet, das einen ersten Gewindezug 33.1, einen zweiten Gewindezug 33.2 und einen dritten Gewindezug 33.3 aufweist, wobei die Gewindezüge 33.1, 33.2 und 33.3 parallel zueinander verlaufen und die gleiche Steigung aufweisen. Das Aussengewinde 32 ist als Trapezgewinde ausgebildet.

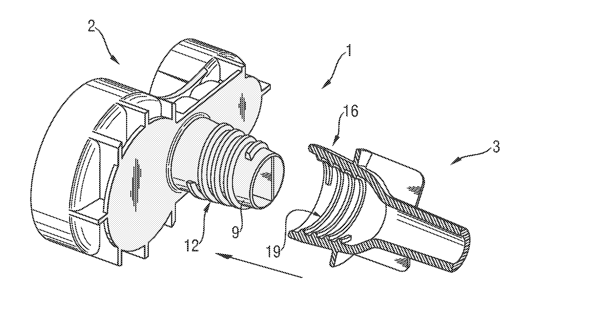

Eine perspektivische Darstellung eines weiteren Ausführungsbeispiels der Erfindung mit einem Verbindungsteil eines Auspressgeräts und einem Mischerrohr, im Teilschnitt, vor der Zusammenführung beider Teile ist in der Fig. 3 gezeigt. Der erfindungsgemässe Schnellverschluss 41 umfasst als erstes Teil das Verbindungsteil 42 und als zweites Teil ein Mischerrohr 43.

Das Verbindungsteil 42 ist im Wesentlichen gleich wie das in Fig. 1 beschriebene Verbindungsteil 2 ausgebildet, wobei der Anschluss 44 bei dieser Ausführungsform an dessen Aussenseite nur ein eingängiges Gewinde 45 mit einem Gewindezug 46 angeordnet hat.

Das Mischerrohr 43 ist im Wesentlichen gleich wie das in Fig. 1 beschriebene Mischerrohr 3 ausgebildet. Das zweigängige Innengewinde 47 im Anschlussteil 50 des Mischerrohres 43 weist ebenfalls einen ersten Gewindezug 48.1 und einen zweiten Gewindezug 48.2 auf. Die Steigung und Ausbildung des Gewindezugs 46 des Aussengewindes 45 am Anschluss 44 entspricht in der Steigung und in der Ausbildung den Gewindezügen 48.1 und 48.2 am Innengewinde 47.

Das Mischerrohr 43 wird in Richtung des Pfeils 49 über den Anschluss 44 am Verbindungsteil 42 geführt, bis sich das Ende des Gewindezugs 46 des Aussengewindes 45 am Anschluss 44 und einer der Gewindezüge 48.1 oder 48.2 im Endbereich des Innengewindes 47 im Anschlussteil 50 berühren. Durch beispielsweise eine Drehung um den halben Umfang wird das Mischerrohr 43 mit dem Verbindungsteil 42 kraftschlüssig verbunden.

Zusammenfassend ist festzustellen, dass mit der Erfindung ein Schnellverschluss zum Verbinden zweier Teile geschaffen wurde, der infolge der Ausbildung des Aussen- und Innengewindes grosse Kräfte übertragen kann und somit eine hohe Anwendersicherheit bietet. Zudem ist der erfindungsgemässe Schnellverschluss einfach in der Anwendung sowie einfach und kostengünstig herstellbar.

## Patentansprüche

1. Schnellverschluss (1; 41) zum Verbinden eines ersten Teils (2; 31; 42) und eines zweiten Teils (3; 43), insbesondere zum Verbinden eines Mischerrohres (3; 43) und eines Verbindungsteils (2; 42) eines Auspressgeräts, wobei der erste Teil (2; 31; 42) einen kon i-schen Gewindegrundkörper mit einem, entlang dem konischen Gewindekörper verlaufenden Aussengewinde (12; 32; 45) aufweist und der zweite Teil (3; 43) einen konischen Gewindegrundkörper mit einem, in dem konischen Gewindegrundkörper verlaufenden Innengewinde (19; 47) aufweist, **dadurch gekennzeichnet, dass** das Innengewinde (19; 47) am zweiten Teil (3; 43) ein mehrgängiges Gewinde mit mehreren Gewindezügen (22.1, 22.2; 48.1, 48.2) ist.

2. Schnellverschluss nach Anspruch 1, **dadurch gekennzeichnet, dass** das Aussengewinde (12; 32; 45) am ersten Teil (2; 31; 42) komplementär zum Innengewinde (19; 45) am zweiten Teil (3; 43) ausgebildet ist, und dass das Aussengewinde (12; 32) die gleiche Anzahl an Gewindezügen (13.1, 13.2) wie das Innengewinde (19) aufweist.

3. Schnellverschluss nach Anspruch 1 oder 2, **dadurch gekennzeichnet, dass** das Aussengewinde (12; 45) ein Sägezahngewinde ist.

4. Schnellverschluss nach einem der Ansprüche 1 bis 3, **dadurch gekennzeichnet, dass** an der freien Stirnkante (11) des ersten Teils (2) ein Dichtabschluss zur Abdichtung der Verbindung zwischen dem ersten Teil (2) und dem zweiten Teil (3) angeordnet ist.

5. Schnellverschluss nach Anspruch 4, **dadurch gekennzeichnet, dass** der zweite Teil (3) eine Aufnahme (20) insbesondere zur Zentrierung einer Dichtlippe (14) aufweist.

6. Schnellverschluss nach einem der Ansprüche 1 bis 5, **dadurch gekennzeichnet, dass** der erste Teil (2; 31; 42) und/oder der zweite Teil (3; 43) aus einem Kunststoff, optional mittels einem Spritz-/Gussverfahren gefertigt sind.
